# EUROPEAN PATENT SPECIFICATION

(11) **EP 3 845 074 B1**
(45) Date of publication and mention of the grant of the patent: **11.03.2026**
(21) Application number: 19853483.6
(22) Date of filing: 29.08.2019
(51) Int. Cl.: A23L 5/41, A23L 2/00, A23L 2/58

(54) **USE OF A PHOTODEGRADATION INHIBITOR AND PHOTODEGRADATION INHIBITION METHOD**
VERWENDUNG EINES PHOTODEGRADATIONSHEMMERS UND VERFAHREN ZUR HEMMUNG VON PHOTODEGRADATION
UTILISATION D'UN INHIBITEUR DE PHOTODÉGRADATION ET PROCÉDÉ D'INHIBITION DE PHOTODÉGRADATION

(30) Priority: 30.08.2018 JP 2018161989
(43) Date of publication of application: 07.07.2021
(73) Proprietor: MITSUBISHI GAS CHEMICAL COMPANY, INC., Chiyoda-ku Tokyo 100-8324 (JP)
(72) Inventor: IKEMOTO, Kazuto, Niigata-shi, Niigata 950-3112 (JP)
(74) Representative: Müller-Boré & Partner Patentanwälte PartG mbB
(86) International application number: PCT/JP2019/033891
(87) International publication number: WO 2020/045564

(56) References cited:
- EP-A1- 3 701 804
- WO-A1-2008/044659
- WO-A1-2008/044659
- WO-A1-2018/003531
- JP-A- 2011 026 226
- JP-A- 2011 026 226
- JP-A- 2014 162 787
- JP-A- 2014 162 787
- JP-A- 2015 063 486
- JP-A- 2015 063 486
- JP-A- 2016 065 038
- JP-A- 2016 065 038
- JP-A- H0 525 049
- JP-A- H0 525 049
- JP-A- H04 288 016
- JP-A- H04 288 016
- JP-A- H07 258 165
- JP-A- H07 258 165
- JP-A- S63 238 016
- JP-A- S63 238 016

## Description

### Technical Field

The present invention relates to a use of a photodeterioration inhibitor for inhibiting photodeterioration of pyrroloquinoline quinone and/or a salt thereof, a method for inhibiting the photodeterioration of pyrroloquinoline quinone and/or a salt thereof, and a use of one or more colorants for producing a photodeterioration inhibitor of pyrroloquinoline quinone and/or a salt thereof.

### Background Art

Non-alcoholic beverages (also referred to as soft drinks) have been popular as a convenient means of hydration and entertained consumers with diverse tastes and needs with a wide variety of flavors and functions. Beverages packed in light-transmitting containers such as transparent PET bottles and glass bottles have the advantage that the appearance and quantity of contents of the beverages can be seen compared to cans and paper containers. Furthermore, PET bottles also have the convenience of being able to be closed again, and therefore beverages in PET bottles have been in great demand.

Pyrroloquinoline quinone (PQQ) has been used as a food having functions of improving brain function, antioxidant activity, and mitochondrial neoplasia. In particular, the PQQ disodium salt has been widely used since the product, BioPQQ has been recognized by the US FDA as a new food ingredient of food. The light stability of this PQQ aqueous solution is relatively high, however, a light-shielding container has been required to render it more stable (Patent Literature 1).

Moreover, there have also been a few reports on the reaction of pyrroloquinoline quinone derivatives to light (Non-Patent Literature 1).

Further, Patent Literature 2 relates to pyrroloquinoline quinone monosodium, a process for producing the same, and a composition containing the same.

### Citation List

### Patent Literature

Patent Literature 1: JP 2011 026226 A
Patent Literature 2: WO 2018/003531 A1

### Non Patent Literature

Non Patent Literature 1: Fukuzumi, Shunichi, Itoh, Shinobu, Komori, Takasi Suenobu, Tomoyoshi, Ishida, Akito, Fujitsuka, Mamoru, Ito, Osamu, J. Am. Chem. Soc. 2000, 122, pp 8435-8443

### Summary of Invention

### Technical Problem

Light-transmitting transparent containers such as PET bottles are susceptible to an effect of light and there is a risk of bringing about degradation of beverage components contained due to exposure to light upon distribution and storage thereof, depending on types of beverages to be filled. The degradation of the components may result in deterioration of flavor and taste thereof.

In fact, photodeterioration of pyrroloquinoline quinone may cause not only reduction of the desired function but also deterioration of the taste. For example, a product containing pyrroloquinoline quinone has its taste adjusted in combination with pyrroloquinoline quinone, and if the amount of pyrroloquinoline quinone decreases, the balance of the taste may be lost. Therefore, it is necessary to provide a method for inhibiting or preventing photodeterioration of pyrroloquinoline quinone in providing a product comprising pyrroloquinoline quinone in a transparent container such as PET bottles.

### Solution to Problem

In order to solve the above problem, the present inventors have found, as a result of intensive research and experiments on a method for preventing photodeterioration of a pyrroloquinoline quinone-containing beverage, that a specific colorant is effective for inhibiting photodeterioration of the pyrroloquinoline quinone-containing beverage, and thus have completed the present invention.

Namely, the present invention is set out in the appended set of claims.

### Advantageous Effects of Invention

According to the present invention it is possible to inhibit photodeterioration of a beverage comprising pyrroloquinoline quinone and/or a salt thereof by using a specific colorant as an active ingredient. Moreover, it has also been clarified that some colorants exhibited a photodeterioration inhibition effect when combined with ascorbic acid for use.

When pyrroloquinoline quinone is used in a PET bottle beverage among beverages, which is susceptible to the effect of transmitted light due to the transparent container, the concentration for use from 1 mg/L to 100 mg/L is considered to be quite low. The present inventors have found, as a result of having re-measured the photostability of pyrroloquinoline quinone in the PET bottle beverage, that the sample relatively stable at a high concentration has a defect of having progressed degradation at a low concentration. The photodeterioration inhibitor can be suitably used in such PET bottle beverages.

### Description of Embodiments

In the first embodiment, the present invention provides a use of a photodeterioration inhibitor of pyrroloquinoline quinone and/or a salt thereof, comprising, as active ingredient(s), one or more colorants selected from the group consisting of Food Red No. 2, carthamus yellow colorant, cochineal colorant, purple sweet potato colorant, red radish colorant, and gardenia blue colorant.

As used herein, "photodeterioration" refers to a decrease in pyrroloquinoline quinone with an elapse of time due to exposure to an ultraviolet light or an illumination light. The colorants described above can significantly inhibit such a decrease in pyrroloquinoline quinone.

When the photodeterioration inhibitor is added to food or drink, the above colorants are required to be food colorants. Such colorants are commercially available. Food Red No. 2 is a tar colorant for food.

The carthamus yellow colorant includes, for example, Safflower Y1500, which is a natural colorant for food manufactured by Daiwa Kasei Kogyo Co., Ltd., however, is not limited thereto.

The cochineal colorant includes, for example, Cochineal Red AL and Highred MC, which are natural colorants for food manufactured by Daiwa Kasei Kogyo Co., Ltd., however, is not limited thereto.

The purple sweet potato colorant includes, for example, Highred V80, which is a natural colorant for food manufactured by Daiwa Kasei Kogyo Co., Ltd., however, is not limited thereto.

The red radish colorant includes, for example, Highred RA-200, which is a natural colorant for food manufactured by Daiwa Kasei Kogyo Co., Ltd., however, is not limited thereto.

The gardenia blue colorant includes, for example, Highblue AT, which is a natural colorant for food manufactured by Daiwa Kasei Kogyo Co., Ltd., however, is not limited thereto.

The above colorants can be used alone or in combination with plural types thereof provided that they have photodeterioration inhibition effects. The amount of the colorant added is appropriately adjusted in the range of, for example, 0.1 to 1000 mg/L. When the concentration of pyrroloquinoline quinone is 10 mg/L, the concentration of the colorant is preferably in the range of 5 to 100 mg/L. The amount of the colorant added can be determined in consideration also of the effect on taste and health in addition to the required degree of the photodeterioration inhibition effect.

Pyrroloquinoline quinone used in the present invention is a substance having the structure represented by formula 1. This substance may exist as a free form of pyrroloquinoline quinone or as a salt thereof. The commercially available pyrroloquinoline quinone and/or the salt thereof may be used, or they can be produced by a known method. The salt of pyrroloquinoline quinone used in the present invention includes alkali metal salts, alkaline earth metal salts, and ammonium salts, of pyrroloquinoline quinone, but the alkali metal salts thereof are preferred.

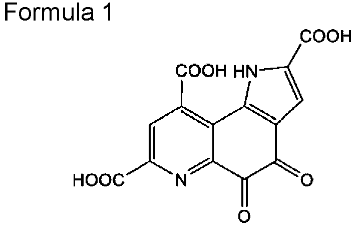

The alkali metal salt of pyrroloquinoline quinone used in the present invention includes, for example, salts of sodium, potassium, lithium, cesium, rubidium, etc. The sodium salt or the potassium salt is more preferred as the alkali metal salt in terms of easy availability thereof. The alkali metal salt of pyrroloquinoline quinone may be an alkali metal salt substituted with 1 to 3 alkali metals, and may be any of a monoalkali metal salt, a dialkali metal salt, and a trialkali metal salt, with the dialkali metal salt being preferred. The disodium salt or the dipotassium salt is particularly preferred.

In the second embodiment, the photodeterioration inhibitor used in the present invention is comprised in a composition, wherein the composition comprises a photodeterioration inhibitor, and pyrroloquinoline quinone and/or a salt thereof.

Such a composition includes, for example, food or drink, in particular, PET bottle beverages, etc., that are expected to be affected by transmitted light, and the type of the composition is not particularly restricted provided that pyrroloquinoline quinone can be added to the composition and it is exposed to an environment where the added pyrroloquinoline quinone may be photodeteriorated.

The content of pyrroloquinoline quinone can be appropriately determined by the person skilled in the art according to the desired effect. In one embodiment, the content of pyrroloquinoline quinone and/or the salt thereof in the present invention is 1 mg/L to 100 mg/L. The content is preferably 10 to 80 mg/L and more preferably 15 to 60 mg/L.

When the composition is a food or drink, in addition to the above colorants and pyrroloquinoline quinone, components, such as sweeteners, acidulants, inorganic salts, organic acid salts, amino acids, proteins, nucleic acids, flavors, preservatives, etc., can be appropriately contained in the ranges where the desired effects are not impaired.

The food or drink is contemplated to be used within the range of pH 1 to 9. In the case of soft drinks, they often provide cool sensation by rendering a pH thereof acidic. Therefore, when the composition is provided in the form of soft drink, it is considered that the pH is preferably 1 to 4. A substance used for adjusting the pH is not particularly limited provided that it can be added to food, however, ascorbic acid is preferable. Ascorbic acid also acts as a reducing agent and can also be used as a pH adjuster. Moreover, by adding an alkali metal salt thereof, for example, sodium ascorbate, the pH is less likely to change due to its buffering effect.

Ascorbic acid can play a role not only as a pH adjuster but also as an antioxidant. Further, ascorbic acid alone has a photodeterioration inhibition effect, however, by adding it in a predetermined amount or more of, for example, about 200 mg to 2000 mg per 1 liter, it is possible to enhance the photodeterioration inhibition effect of specific colorants such as Food Red No. 2, cochineal colorant, purple sweet potato colorant, red radish colorant, or gardenia blue colorant. Moreover, an anthocyanin colorant and beet red do not exhibit the photodeterioration inhibition effect by themselves, however, they exhibit the photodeterioration inhibition effect when combined with ascorbic acid and/or the salt thereof for use. From the viewpoint of exhibiting the photodeterioration inhibition effect, ascorbic acid may be added in an amount of 10 to 1000 mg/L.

The beet red includes, for example, Highred BL, which is a natural colorant for food manufactured by Daiwa Kasei Kogyo Co., Ltd., but is not limited thereto.

The anthocyanin colorant includes, for example, Highred G-150, which is a natural colorant for food manufactured by Daiwa Kasei Kogyo Co., Ltd., but is not limited thereto.

Various additives other than the components described above can be added according to the desired final product form provided that the intended effects are not impaired. Moreover, food components such as fruit juices, coffee extracts, tea leaf extracts, milk components, etc., may be added depending on the purposes. For example, sweeteners may be added according to the flavor of the aimed beverage provided that the desired effects are not impaired. The type of the sweetener to be added is not particularly limited provided that it is a sweetener that can be used in food or drink.

The present invention can also be applied for tea beverages. Green teas that are unfermented teas, Oolong teas that are semi-fermented teas, teas that are fermented teas, and microbial fermented teas such as black teas obtained by fermenting tea leaves with microorganisms, etc., may be used.

The photodeterioration inhibitor can be filled in a light-transmitting transparent container together with a beverage comprising pyrroloquinoline quinone. Such a transparent container includes glass, PET bottles, etc. In addition to adding the photodeterioration inhibitor, a non-transmissive film is attached to the container to further inhibit photodeterioration. Alternatively, the container itself may be colored with a color that blocks transmitted light instead of using the film.

In the third embodiment, the present invention provides a method for inhibiting photodeterioration of pyrroloquinoline quinone and/or the salt thereof, comprising a step of bringing the photodeterioration inhibitor into contact with pyrroloquinoline quinone and/or the salt thereof, wherein the photodeterioration inhibitor comprises, as active ingredient(s), one or more colorants selected from the group consisting of Food Red No. 2, carthamus yellow colorant, cochineal colorant, purple sweet potato colorant, red radish colorant, and gardenia blue colorant.

Such a method can be suitably employed in the production of a composition comprising pyrroloquinoline quinone, etc.

In the fourth embodiment, the present invention provides use of one or more colorants selected from the group consisting of Food Red No. 2, carthamus yellow colorant, cochineal colorant, purple sweet potato colorant, red radish colorant, and gardenia blue colorant, for producing the photodeterioration inhibitor of pyrroloquinoline quinone and/or the salt thereof.

In another embodiment, the photodeterioration inhibitor used in the present invention may comprise one or more colorants selected from the group consisting of Food Red No. 2, cochineal colorant, purple sweet potato colorant, red radish colorant, and gardenia blue colorant, and ascorbic acid and/or the salt thereof as active ingredient(s).

The photodeterioration inhibitor may comprise the components described above which can be added to the composition, other than pyrroloquinoline quinone and/or the salt thereof and the colorants.

Hereinafter, the present invention will be described in more detail with reference to Examples and Comparative Examples. The present invention is not limited to the following examples.

### Examples

Ion-exchanged water was used as the water for use unless otherwise specified. The materials used were commercially available special grade reagents unless otherwise specified. BioPQQ manufactured by Mitsubishi Gas Chemical Company, Inc., was used as the pyrroloquinoline quinone disodium salt.

### HPLC conditions:

Shimadzu LC-2010
Column: YMC-Pack ODS-A
Detection wavelength: 259 nm
Mobile phase: 30 mM acetic acid - 70 mM ammonium acetate
Column temperature: 40°C

Light irradiation apparatus: A plant incubator CLH-301 manufactured by Tomy Seiko Co., Ltd.
Light irradiation conditions: 30°C and 20,000Lx

This illuminance corresponds to an extremely higher level of illuminance than that applied in general stores.

All the contents of Volvic that is a commercially available PET bottle beverage, were removed and the container was washed with water. This transparent container was used as a storage container.

### (Examination of concentration dependence)

5 to 500 mg of BioPQQ was dissolved in 500 g of water, and the relationship between the concentration and the photodeterioration of BioPQQ was examined. First, a mixture of pyrroloquinoline quinone disodium salt and water was added to the storage container, shaken well, and then submitted to ultrasonication for 1 minute to dissolve the salt. The pH was 3.5. The prepared aqueous solution of pyrroloquinoline quinone disodium salt was stored under the above light irradiation conditions. The concentration of pyrroloquinoline quinone was analyzed by HPLC 5 days after the light irradiation. The table below shows the recoveries of the samples at each concentration after the light irradiation, when the initial concentration of each sample is 100%.

**[Table 1]**

| Pyrroloquinoline quinone disodium salt (mg/L) | Recovery (%) |
|---|---|
| 10 | 71 |
| 20 | 75 |
| 40 | 80 |
| 80 | 85 |
| 120 | 89 |
| 200 | 93 |
| 400 | 98 |
| 500 | 98 |
| 1000 | 100 |

From the above results, it can be seen that the lower the concentration of pyrroloquinoline quinone is, the more severely it tends to be deteriorated by light.

### (Examination of photodeterioration inhibition effect by colorant)

20 mg of BioPQQ was dissolved in 500 g of water (10 mg/L) in the same manner as described above. To this aqueous solution, 100 mg of Red No. 2 was further added (Example A1). As a result of HPLC analysis 5 days after the light irradiation in the same manner as described above, the recovery of the pyrroloquinoline quinone disodium salt was 100%. As a result of storage of the aqueous solution of Example A1 under the dark conditions at 60°C for 7 days, the recovery was 99%.

The aqueous solution (Example A2) was prepared in the same manner as in Example A1 except that the amount of Red No. 2 added was 20 mg, and was subjected to the same light irradiation conditions as described above. The recovery 5 days after the light irradiation was 88%.

The colorant in Example A1 was replaced with another colorant in the same amount of 100 mg, and the photostability of pyrroloquinoline quinone in the aqueous solution was tested in the same manner as in Example A1. The results are shown in Table 2.

**[Table 2]**

| | Colorants (all are manufactured by Daiwa Kasei Kogyo Co., Ltd.) | Recovery (%) |
|---|---|---|
| Example A3 | Carthamus yellow colorant Safflower Y-1500 | 98 |
| Example A4 | Cochineal colorant Highred MC | 95 |
| Example A5 | Purple sweet potato colorant Highred V80 | 93 |
| Example A6 | Red radish colorant Highred RA200 | 92 |
| Reference Example A7 | Green colorant Highgreen B | 93 |
| Example A8 | Gardenia blue colorant Highblue AT | 94 |
| Comparative Example A1 | Beet red Highred BL | 43 |
| Comparative Example A2 | Anthocyanin colorant Highred G-150 | 65 |

Specific colorants such as the cochineal colorant and the gardenia blue colorant gave very high recoveries after the storage test.

### (Combination of ascorbic acid and colorant)

Aqueous solutions were each prepared by adding 20 mg of BioPQQ, 600 mg of citric acid, 50 mg of sodium citrate, and 40 g of sorbitol to 500 mL of water to dissolve these, and further adding 1000 mg of ascorbic acid. 20 mg of a predetermined food colorant was added to each of the obtained aqueous solutions, and light irradiation was carried out in the same manner as described above. The samples were each diluted 5-fold with an aqueous solution of 1% sodium bicarbonate, shaken well for 1 hour, oxidized, and then analyzed by HPLC. The results are shown in Table 3.

**[Table 3]**

| | | Recovery (%) |
|---|---|---|
| Comparative Example B1 | None | 89 |
| Example B1 | Food Red No.2 | 100 |
| Reference Example B2 | Anthocyanin colorant Highred G-150 | 98 |
| Reference Example B3 | Beet red Highred BL | 100 |
| Example B4 | Purple sweet potato colorant Highred V80 | 97 |
| Example B5 | Red radish colorant Highred RA200 | 96 |
| Example B6 | Gardenia blue colorant Highblue AT | 100 |
| Example B7 | Cochineal colorant Highred MC | 87 |
| Reference Example B8 | Green colorant Highgreen B | 89 |

For the samples containing each colorant even at a low concentration, photodeterioration was significantly inhibited by a combination of the colorant with ascorbic acid.

### (Concentration dependence of colorant)

Aqueous solutions in which only the concentrations of Red No. 2 were different from those of Examples A1 and A2, were prepared, and their photodeterioration inhibition effects were confirmed. The same BioPQQ aqueous solution as in A1 and A2 except that it was free of the colorant, was prepared and denoted as Comparative Example A3. The recoveries of the pyrroloquinoline quinone disodium salt are shown in the table below.

**[Table 4]**

| | Red No.2 | | Recovery (%) |
|---|---|---|---|
| | Amount added (mg)/500mL | Concentration (mg/L) | |
| Example A1 | 100 | 200 | 100 |
| Example A2 | 20 | 40 | 88 |
| Example A9 | 15 | 30 | 88 |
| Example A10 | 10 | 20 | 90 |
| Example A11 | 5 | 10 | 84 |
| Comparative Example A3 | 0 | 0 | 80 |

The photodeterioration inhibition effect was confirmed at any concentration of the samples.

### (Examination of ascorbic acid concentration)

Aqueous solutions differing only in the amounts of ascorbic acid added from the amount thereof in Example B1 were prepared and subjected to a light irradiation test in the same manner as described above. Each sample was diluted 5-fold with an aqueous solution of 1% sodium bicarbonate, shaken well for 1 hour, oxidized, and then analyzed by HPLC. The results are shown below.

**[Table 5]**

| | Ascorbic acid Amount added (mg)/500mL | Red No.2 Amount added (mg)/500mL | Recovery (%) |
|---|---|---|---|
| Reference Example B1 | 1000 | 0 | 89 |
| Example B1 | 1000 | 20 | 100 |
| Example B9 | 100 | 20 | 100 |
| Example B10 | 20 | 20 | 83 |
| Example B11 | 0 | 20 | 95 |

From the results in the above table, it can be seen that the additive effect of Red No. 2 and ascorbic acid requires a certain concentration of ascorbic acid.

### (Examination of Highred BL concentration in the presence of ascorbic acid)

An aqueous solution the same as that of Reference Example B3 was prepared except that the amount of Highred BL added was 5 mg, and light irradiation was carried out in the same manner as described above. The results are shown below.

**[Table 6]**

| | Highred BL Amount added (mg)/500mL | Ascorbic acid Amount added (mg)/500mL | Recovery (%) |
|---|---|---|---|
| Comparative Example B2 | 20 | 0 | 78 |
| Reference Example B3 | 20 | 1000 | 100 |
| Reference Example B12 | 5 | 1000 | 99 |
| Reference Example 1 | 0 | 1000 | 89 |

Although Highred BL did not exhibit the photodeterioration inhibition effect when used alone (Table 2), it exhibited the photodeterioration inhibition effect even at the low concentrations when added together with ascorbic acid as shown in the results of Table 6.

### [Industrial Applicability]

Pyrroloquinoline quinone-containing beverages may be distributed and stored in light-transmitting containers, etc. In such beverages, the concentration of pyrroloquinoline quinone may be decreased with an elapse of time, however, according to the photodeterioration inhibitor of the present invention, it is possible to provide pyrroloquinoline quinone-containing beverages that are stable and packaged in containers by preventing the photodeterioration of pyrroloquinoline quinone.

## Claims

1. Use of a photodeterioration inhibitor for inhibiting photodeterioration of pyrroloquinoline quinone and/or a salt thereof, comprising, as active ingredient(s), one or more colorants selected from the group consisting of Food Red **No. 2,** carthamus yellow colorant, cochineal colorant, purple sweet potato colorant, red radish colorant, and gardenia blue colorant.

2. The use according to claim **1,** wherein the salt of pyrroloquinoline quinone is pyrroloquinoline quinone disodium salt.

3. The use according to claim 1 or **2,** wherein the photodeterioration inhibitor is comprised in a composition, wherein the composition further comprises pyrroloquinoline quinone and/or a salt thereof.

4. The use according to claim **3,** wherein the composition is in a form of food or drink.

5. The use according to claim 4, wherein the composition is in a form of drink.

6. The use according to claim 5, comprising the colorant(s) in an amount of 0.1 to 1000 mg/L and pyrroloquinoline quinone and/or a salt thereof in an amount of 1 mg/L to 100 mg/L.

7. A method for inhibiting photodeterioration of pyrroloquinoline quinone and/or a salt thereof, comprising a step of bringing the photodeterioration inhibitor into contact with pyrroloquinoline quinone and/or the salt thereof, wherein the photodeterioration inhibitor comprises, as active ingredient(s), one or more colorants selected from the group consisting of Food Red No. 2, carthamus yellow colorant, cochineal colorant, purple sweet potato colorant, red radish colorant, and gardenia blue colorant.

8. Use of one or more colorants selected from the group consisting of Food Red No. 2, carthamus yellow colorant, cochineal colorant, purple sweet potato colorant, red radish colorant, and gardenia blue colorant, for producing a photodeterioration inhibitor of pyrroloquinoline quinone and/or a salt thereof.

## Patentansprüche

1. Verwendung eines Photoverschlechterungsinhibitors zur Hemmung der Photoverschlechterung von Pyrrolochinolinchinon und/oder einem Salz davon, umfassend als Wirkstoff(e) einen oder mehrere Farbstoffe, ausgewählt aus der Gruppe, bestehend aus Lebensmittelrot Nr. 2, Färberdistelgelb, Cochenillefarbstoff, violettem Süßkartoffelfarbstoff, Rettichrotfarbstoff und Gardenienblaufarbstoff.

2. Verwendung nach Anspruch 1, wobei das Salz des Pyrrolochinolinchinons das Dinatriumsalz des Pyrrolochinolinchinons ist.

3. Verwendung nach Anspruch 1 oder 2, wobei der Photodeteriorationsinhibitor in einer Zusammensetzung enthalten ist, die ferner Pyrrolochinolinchinon und/oder ein Salz davon umfasst.

4. Verwendung nach Anspruch 3, wobei die Zusammensetzung in Form eines Lebensmittels oder Getränks vorliegt.

5. Verwendung nach Anspruch 4, wobei die Zusammensetzung in Form eines Getränks vorliegt.

6. Verwendung nach Anspruch 5, umfassend den/die Farbstoff(e) in einer Menge von 0,1 bis 1000 mg/L und Pyrrolochinolinchinon und/oder ein Salz davon in einer Menge von 1 mg/L bis 100 mg/L.

7. Verfahren zur Hemmung der Photoverschlechterung von Pyrrolochinolinchinon und/oder einem Salz davon, umfassend einen Schritt des In-Kontakt-Bringens des Photoverschlechterungsinhibitors mit Pyrrolochinolinchinon und/oder dem Salz davon, wobei der Photoverschlechterungsinhibitor als Wirkstoff(e) einen oder mehrere Farbstoffe umfasst, ausgewählt aus der Gruppe, bestehend aus Lebensmittelrot Nr. 2, Färberdistelgelb, Cochenillefarbstoff, violettem Süßkartoffelfarbstoff, Rettichrotfarbstoff und Gardenienblaufarbstoff.

8. Verwendung eines oder mehrerer Farbstoffe, ausgewählt aus der Gruppe, bestehend aus Lebensmittelrot Nr. 2, Färberdistelgelb, Cochenillefarbstoff, violettem Süßkartoffelfarbstoff, Rettichrotfarbstoff und Gardenienblaufarbstoff, zur Herstellung eines Photoverschlechterungsinhibitors von Pyrrolochinolinchinon und/oder einem Salz davon.

## Revendications

1. Utilisation d'un inhibiteur de photodégradation pour inhiber la photodégradation de pyrroloquinoline quinone et/ou d'un sel de celle-ci, comprenant, en tant qu'ingrédient(s) actif(s), un ou plusieurs colorants sélectionnés parmi le groupe constitué du rouge alimentaire n° 2, du colorant jaune carthame, du colorant de cochenille, du colorant de patate douce violette, du colorant de radis rouge et du colorant bleu gardénia.

2. Utilisation selon la revendication 1, dans laquelle le sel de pyrroloquinoline quinone est le sel disodique de pyrroloquinoline quinone.

3. Utilisation selon la revendication 1 ou 2, dans laquelle l'inhibiteur de photodégradation est compris dans une composition, dans laquelle la composition comprend en outre de la pyrroloquinoline quinone ou un sel de celle-ci.

4. Utilisation selon la revendication 3, dans laquelle la composition est sous une forme d'aliment ou de boisson.

5. Utilisation selon la revendication 4, dans laquelle la composition est sous une forme de boisson.

6. Utilisation selon la revendication 5, comprenant le(s) colorant(s) en une quantité de 0,1 à 1000 mg/l et de la pyrroloquinoline quinone et/ou un sel de celle-ci en une quantité de 1 mg/l à 100 mg/l.

7. Procédé d'inhibition de la photodégradation de pyrroloquinoline quinone et/ou d'un sel de celle-ci, comprenant une étape consistant à amener l'inhibiteur de photodégradation en contact avec de la pyrroloquinoline quinone et/ou le sel de celle-ci, dans lequel l'inhibiteur de photodégradation comprend, en tant qu'ingrédient(s) actif(s), un ou plusieurs colorants sélectionnés parmi le groupe constitué du rouge alimentaire n° 2, du colorant jaune carthame, du colorant de cochenille, du colorant de patate douce violette, du colorant de radis rouge et du colorant bleu gardénia.

8. Utilisation d'un ou plusieurs colorants sélectionnés parmi le groupe constitué du rouge alimentaire n° 2, du colorant jaune carthame, du colorant de cochenille, du colorant de patate douce violette, du colorant de radis rouge et du colorant bleu gardénia pour produire un inhibiteur de photodégradation de pyrroloquinoline quinone et/ou d'un sel de celle-ci.
